# EUROPEAN PATENT SPECIFICATION

(11) **EP 0 818 670 B1**
(45) Date of publication and mention of the grant of the patent: **25.09.2002**
(21) Application number: 97304954.7
(22) Date of filing: 07.07.1997
(51) Int. Cl.: G01J 11/00, G04F 13/02

(54) **Optical pulse autocorrelator**
Gerät zur Autokorrelation optischer Impulse
Dispositif d'autocorrélation d'impulsions optiques

(30) Priority: 09.07.1996 GB 9614363
(43) Date of publication of application: 14.01.1998
(73) Proprietor: COUNCIL FOR THE CENTRAL LABORATORY OF THE RESEARCH COUNCILS, Chilton Didcot, Oxfordshire OX11 0QX (GB)
(72) Inventor: Collier, John, Oxfordshire (GB)
(74) Representative: Perkins, Sarah

(56) References cited:
- US-A- 4 320 973
- US-A- 4 472 053
- US-A- 4 628 473
- US-A- 5 453 835
- US-A- 5 483 344

## Description

The present invention relates to an optical pulse autocorrelator and in particular to an autocorrelator in which the components of the autocorrelator are aligned on a single, i.e. one dimensional, axis.

An optical pulse autocorrelator enables measurement of the pulse duration of very short pulses which are routinely generated using modem laser systems. The autocorrelator works by the splitting of an input pulse beam to be measured into two split beams and then recombining the two split beams in a non-linear crystal which produces a sum frequency signal when the two split beams overlap both spatially and in time. The wavelength of the signal generated by the crystal is exactly half the wavelength of the original input pulse beam. For measurement of the duration of a single input pulse beam, a delay is imposed across the diameter of one of the two split beams which is commonly termed a *time shear.* The sum frequency signal generated by the non-linear crystal then becomes a function of the spatial co-ordinate across the diameter of the beam. Assuming the intensity across the diameters of the two split beams is constant, the transverse intensity distribution of the sum frequency signal is directly related to the intensity distribution **in time** of the split beams. This delay may be imposed using a diffraction grating (as described in, for example, US 4,472,053) or for very short pulses the two split beams are arranged so as to cross each other at an angle within the non-linear crystal since it is the relative shear between the split beams rather than the absolute shear of either which is relevant. Conventionally, a 50% reflectivity mirror is employed for splitting the incident pulse which results in a bi-axial design. Also, often the subsequent components of the device for ensuring careful matching of the optical path lengths of the two pulse halves, for example a retroreflector, results in the device becoming a tri-axial design with the inherent increase in overall size. Especially with larger laser systems where the pulse repetition rates are very low and laser pulses are only available for example on a minute by minute basis, alignment of the various components in such tri-axial systems is very difficult.

The present invention seeks to overcome the disadvantages in conventional autocorrelation systems described above and provides an autocorrelator which is uni-axial in design and so is compact and easier to align.

The present invention provides an optical pulse autocorrelator suitable for measuring the duration of very short pulses having a wavefront shear generator, a frequency mixing crystal and a detector for detecting a sum frequency signal generated within the frequency mixing crystal whereby the detector comprises linear measuring means for measuring the transverse length of the emergent signal from the crystal, characterised in that the wavefront shear generator comprises a polarising beam splitter for generating two orthogonally polarised split beams which diverge at an angle substantially less than 90° and a beam angle modifier positioned across the path of the divergent split beams and arranged to divert the divergent beams to an intercept location within the frequency mixing crystal at a predetermined convergence angle, whereby the wavefront shear generator, crystal, beam splitter and beam angle modifier are aligned along a common axis.

Preferably, the polarising beam splitter is in the form of a Woolaston prism. Also, the beam angle modifier may be in the form of a Woolaston prism or a bi-prism.

In a preferred embodiment a retardation plate is provided with a cylindrical lens having a focal plane coincident with the frequency mixing crystal in front of the polarising beam splitter. Additionally, an imaging lens and pin-hole are provided between the frequency mixing crystal and the detector. The detector may be in the form of photographic film or may be an array of photodiodes or a CCD camera.

In an alternative embodiment a diffraction grating is provided in front of the polarising beam splitter and a shear inversion prism is provided so as to intercept one of the two split beams with a delay compensation block located so as to intercept the other of the two split beams between the polarising beam splitter and the beam angle modifier. With this arrangement both short and longer duration pulses may be measured depending upon whether the zero order or first order of the grating forms the incident pulse.

Reference herein to a Woolaston prism is to be understood as reference to a device consisting of two prisms of birefringent material secured together so that the optical axes of the two prisms are orthogonal whereby arbitrarily polarised incident light on the interface of the two prisms is split into two orthogonally polarised beams.

Embodiments of the present invention will now be described by way of example with reference to the accompanying drawings, in which:
Figure 1 is a schematic diagram of a first design of an autocorrelator in accordance with the present invention;
Figure 2 is a schematic diagram of a second design of an autocorrelator in accordance with the present invention; and
Figure 3 is a schematic diagram of the design of Figure 1 adapted for longer pulse lengths.

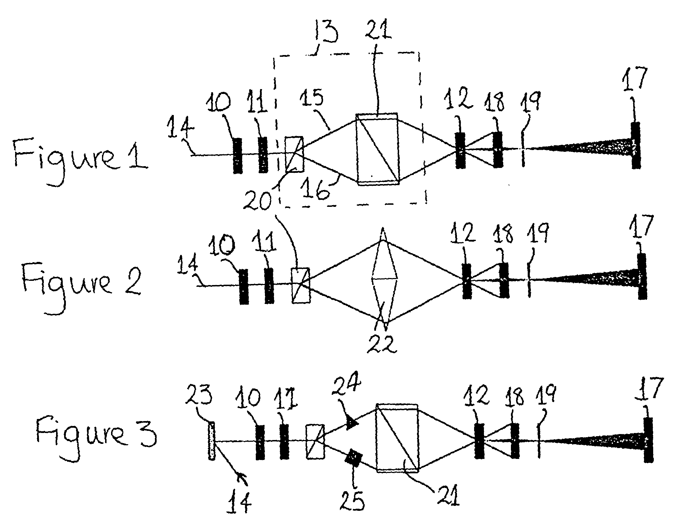

The basic design of the autocorrelator is shown in Figure 1. The autocorrelator consists of a waveplate 10 providing quarter- or half- wave retardation which is aligned with a cylindrical lens 11 having a focal plane which is coincident with the focal plane of a conventional non-linear, frequency doubling crystal 12 which is cut for correct phase matching to produce a sum frequency signal. Between the cylindrical lens 11 and the frequency doubling crystal 12 a wavefront shear generator 13 is provided which splits the incident pulse 14 into two portions 15, 16 with the waveplate 10 having determined the splitting ratio of the incident pulse 14. The input pulse 14 ideally has a uniform and constant spatial profile over the input aperture of the device through the waveplate 10. Each portion of the pulse is then directed to a common point in the frequency doubling crystal 12 at a predetermined convergence angle α. The emergent signal from the frequency doubling crystal 12 is imaged onto a detector 17 using conventional techniques. For example, the emergent signal may be focused by an imaging lens 18 through a pin hole 19 to the detector 17. The pin hole 19 ensures that residual fundamental or unwanted second harmonics of the two portions are prevented from reaching the detector 17. The detector 17 may be in the form of a CCD camera. However, many alternative optical detectors are equally suitable since it is only the transverse length of the emergent signal which is in the form of a line of light in the frequency doubling crystal which is needed to determine the pulse duration. Neither the intensity nor the thickness of the line formed in the crystal need be measured. Hence alternative detectors include photographic film or a linear array of photo diodes or CCD devices. Moreover, the measurement of the emergent signal need not be absolute and instead may be measurable comparatively by pre-calibration of the autocorrelator.

In Figure 1 the wavefront shear generator 13 consists of two Woolaston prisms 20, 21. The first Woolaston prism 20 acts as a polarising beam splitter which splits the arbitrarily polarised incident pulse 14 into two orthogonally polarised pulses 15, 16, preferably but not essentially of approximately equal intensity. The two split pulses 15, 16, which are divergent from the first Woolaston prism 20, are then incident on the second Woolaston prism 21 which acts as a beam angle modifier and causes the split pulses 15, 16 to converge at a predetermined angle with the crossover point being within the frequency doubling crystal 12.

The second Woolaston prism of Figure 1 can be replaced by a symmetric bi-prism 22 as shown in Figure 2 which has the same effect of directing the split pulses to a cross-over point within the frequency doubling crystal 12.

The range of the autocorrelator is limited by the pulse diameter or aperture of the device and the cross-over angle. Thus, Figure 3 shows an autocorrelator capable of accommodating longer pulse lengths. The incident pulse is directed into the wavefront shear generator 13 by means of a diffraction grating 23. The first order off the grating 23 is used as the input pulse with the grating imposing a time shear on the pulse. Within the wavefront shear generator 13, after the incident pulse 14 is split by the polarising beam splitter 20 one of the two split pulses 15 passes through a shear inversion prism 24 or dove prism which reverses or flips the shear on the split pulse 15. The other of the two split pulses 16 passes through a delay compensation block 25 to compensate for the increased optical delay experienced by the split pulse passing through the shear inversion prism 24. As the relative shear angle between the two split pulses at the cross-over point in the frequency doubling crystal 12 is much greater than for the devices of Figures 1 and 2 the pulse duration range of the autocorrelator is similarly greater. Where the autocorrelator of Figure 3 is to be used with very short pulses the incident pulse can be taken from the zero order of the diffraction grating 23 rather than the first order.

Setting up of the autocorrelator is very simple as the group delay in each arm of the autocorrelator is substantially the same. This greatly simplifies the alignment of the components. Also, the absolute calibration of the autocorrelator is fixed and cannot be adjusted by the user. For calibration a glass etalon or other optically transmissive material of known refractive index and thickness is inserted into the path of one of the split pulses. Two images of the sum frequency signal, one without the etalon and one with the etalon, are taken and compared with the separation between the images being representative of the optical path difference between the plate and the same thickness of air.

As an example of how the autocorrelator may be used to determine the duration of a pulse of light, consider a pulse of light having a wavelength of 1064 nm, a popular wavelength for lasers, which is polarised. The waveplate rotates the polarity of the incident pulse resulting in approximately equal intensities in each split pulse. The split pulses are incident on the crystal which generates a sum frequency signal having a wavelength of 532 nm. A 0.3 mm thick glass etalon is then inserted into the path of one of the split pulses. This causes the location of the sum frequency signal to be moved horizontally. Assuming the etalon to have a refractive index of 1.5, the extra delay resulting from the introduction of the etalon is: (0.3x10⁻³).(1.5-1.0)/3x10⁸=500 fs. A horizontal scan through the two sum frequency signals would therefore show two peaks separated by 500 fs. As the horizontal scale of the detector is now calibrated this enables the transverse length of the signal to be measured. The relationships between incident pulse temporal forms and autocorrelation spatial forms are well documented for a variety of pulse shapes. For an incident pulse having a *sech*² profile in time the Full Width Half Maximum (FWHM) spatial autocorrelation width is 1.55 times larger than the FWHM temporal width. Different profiles have different factors but in general the factor is in the region of 1.55. Assuming a measured FWHM width of 230 fs, the true pulse duration is therefore 230/1.55=150 fs.

With the optical pulse autocorrelator described above alignment and operation are simplified in comparison to known multi-axial autocorrelators. In particular all of the components of the autocorrelator are aligned along a single, one dimensional axis. This affords further advantages in that the autocorrelator is much more compact in size and is suitable for ultra-fast pulses as the device is substantially non-dispersive.

## Claims

1. An optical pulse autocorrelator suitable for measuring the duration of very short pulses having a wavefront shear generator (13), a frequency mixing crystal (12) and a detector (17) for detecting a sum frequency signal generated within the frequency mixing crystal (12), whereby the detector comprises linear measuring means for measuring the transverse length of the emergent signal from the crystal (12), **characterised in that** the wavefront shear generator (13) comprises a polarising beam splitter (20) for generating two orthogonally polarised split beams (15, 16) which diverge at an angle substantially less than 90° and a beam angle modifier (21, 22) positioned across the path of the divergent split beams (15, 16) and arranged to divert the divergent beams to an intercept location within the frequency mixing crystal (12) at a predetermined convergence angle, whereby the wavefront shear generator (13), crystal (12), beam splitter (20) and beam angle modifier (21, 22) are aligned along a common axis.

2. An optical pulse autocorrelator as claimed in claim 1, **characterised in that** the polarising beam splitter (20) comprises two orthogonally arranged birefringent prisms.

3. An optical pulse autocorrelator as claimed in either of claims 1 or 2, **characterised in that** the beam angle modifier (21) comprises two orthogonally arranged birefringent prisms.

4. An optical pulse autocorrelator as claimed in either of claims 1 or 2, **characterised in that** the beam angle modifier (22) comprises a symmetric bi-prism.

5. An optical pulse autocorrelator as claimed in any one of the preceding claims, **characterised in that** a retardation plate (10) and lensing means (11) are located on the common axis in front of the polarising beam splitter (20) with the lensing means (11) having a focal plane coincident with the frequency mixing crystal (12).

6. An optical pulse autocorrelator as claimed in any one of the preceding claims, **characterised in that** there is additionally provided a diffraction grating (23) located on the common axis and in front of the wavefront shear generator (13) and the wavefront shear generator (13) includes a shear inversion prism (24) between the polarising beam splitter (20) and the beam angle modifier (21) for inverting the shear on one of the two split beams.

7. An optical pulse autocorrelator as claimed in claim 6, **characterised in that** there is further provided a delay compensation block (25) between the polarising beam splitter (20) and the beam angle modifier (21) for delaying the other of the two split beams.

## Patentansprüche

1. Autokorrelator für optische Pulse, geeignet zur Messung der Dauer sehr kurzer Pulse, der Folgendes aufweist: einen Wellenfront-Scherungserzeuger (13), ein Frequenz-Mischkristall (12) und einen Detektor (17) zur Detektion eines Summenfrequenzsignals, das in dem Frequenz-Mischkristall (12) erzeugt wird, wobei der Detektor ein lineares Messmittel zum Messen der Querlänge des aus dem Kristall (12) austretenden Signals umfasst, **dadurch gekennzeichnet, dass** der Wellenfront-Scherungserzeuger (13) Folgendes umfasst: einen Polarisationsstrahlteiler (20) zum Erzeugen zweier orthogonal polarisierter Spaltstrahlen (15, 16), die bei einem Winkel von wesentlich weniger als 90° divergieren und einen Strahlwinkelmodifikator (21, 22), der über den Pfad der divergierenden Spaltstrahlen (15, 16) positioniert ist und angeordnet ist, um die divergierenden Strahlen an einen Intercept-Ort in dem Frequenz-Mischkristall (12) bei einem prädeterminierten Konvergenzwinkel abzulenken, wobei der Wellenfront-Scherungserzeuger (13), das Kristall (12), der Strahlteiler (20) und der Strahlwinkelmodifikator (21, 22) entlang einer gemeinsamen Achse ausgerichtet sind.

2. Autokorrelator für optische Pulse nach Anspruch 1, **dadurch gekennzeichnet, dass** der Polarisationsstrahlteiler (20) zwei orthogonal angeordnete doppelbrechende Prismen umfasst.

3. Autokorrelator für optische Pulse nach einem der Ansprüche 1 oder 2, **dadurch gekennzeichnet, dass** der Strahlwinkelmodifikator (21) zwei orthogonal angeordnete doppelbrechende Prismen umfasst.

4. Autokorrelator für optische Pulse nach einem der Ansprüche 1 oder 2, **dadurch gekennzeichnet, dass** der Strahlwinkelmodifikator (22) ein symmetrisches Doppelprisma umfasst.

5. Autokorrelator für optische Pulse nach jedem einzelnen der vorangehenden Ansprüche, **dadurch gekennzeichnet, dass** sich eine Retardationsplatte (10) und ein Linsenmittel (11) auf der gemeinsamen Achse vor dem Polarisationsstrahlteiler (20) mit dem Linsenmittel (11) befinden, das eine mit dem Frequenzmischkristall (12) deckungsgleiche Fokalebene aufweist.

6. Autokorrelator für optische Pulse nach jedem einzelnen der vorangehenden Ansprüche, **dadurch gekennzeichnet, dass** ein zusätzliches Beugungsgitter (23) vorgesehen ist, das sich auf der gemeinsamen Achse vor dem Wellenfront-Scherungserzeuger (13) befindet und der Wellenfront-Scherungserzeuger (13) ein Scherungsinversionsprisma (24) zwischen dem Polarisationsstrahlteiler (20) und dem Strahlwinkelmodifikator (21) zur Inversion der Scherung an einem der beiden Spaltstrahlen einschließt.

7. Autokorrelator für optische Pulse nach Anspruch 6, **dadurch gekennzeichnet, dass** ferner ein Verzögerungskompensationsblock (25) zwischen dem Polarisationsstrahlteiler (20) und dem Strahlwinkelmodifikator (21) zur Verzögerung des anderen der beiden Spaltstrahlen vorgesehen ist.

## Revendications

1. Autocorrélateur d'impulsions optiques adapté pour mesurer la durée des impulsions ultracourtes, comprenant un générateur shearographique du front d'onde (13), un cristal mélangeur de fréquence (12) et un détecteur (17) pour détecter un signal de fréquence somme généré dans le cristal mélangeur de fréquence (12), au moyen duquel le détecteur comprend des dispositifs de mesure linéaires pour mesurer la longueur transverse du signal émergent du cristal (12), **caractérisé en ce que** le générateur shearographique du front d'onde (13) comprend un séparateur du faisceau de polarisation (20) à même de générer deux faisceaux partagés de polarisation orthogonale (15, 16) divergeant à un angle bien inférieur à 90°, ainsi qu'un modificateur de l'angle d'ouverture du faisceau (21, 22) positionné sur la trajectoire des faisceaux partagés divergents (15, 16) conçu de façon à scinder les faisceaux divergents en un point d'interception dans le cristal mélangeur de fréquence (12) à un angle de convergence prédéterminé, et au moyen duquel le générateur shearographique du front d'onde (13), le cristal (12), le séparateur de faisceau (20) et le modificateur de l'angle d'ouverture du faisceau (21, 22) sont alignés le long d'un axe commun.

2. Autocorrélateur d'impulsions optiques selon la revendication 1, **caractérisé en ce que** le séparateur du faisceau de polarisation (20) comprend deux prismes biréfringents disposés perpendiculairement.

3. Autocorrélateur d'impulsions optiques selon la revendication 1 ou 2, **caractérisé en ce que** le modificateur de l'angle d'ouverture du faisceau (21) comprend deux prismes biréfringents disposés perpendiculairement.

4. Autocorrélateur d'impulsions optiques selon la revendication 1 ou 2, **caractérisé en ce que** le modificateur de l'angle d'ouverture du faisceau (22) comprend un biprisme symétrique.

5. Autocorrélateur d'impulsions optiques selon l'une quelconque des revendications ci-dessus, **caractérisé en ce qu'**une lame à retard (10) et des dispositifs de lentilles (11) sont placés dans l'axe commun face au séparateur du faisceau de polarisation (20), et dont ces dispositifs de lentilles (11) ont un plan focal qui coïncide avec le cristal mélangeur de fréquence (12).

6. Autocorrélateur d'impulsions optiques selon l'une quelconque des revendications ci-dessus, **caractérisé en ce qu'**il est complémentairement équipé d'un réseau de diffraction (23) placé dans l'axe commun et face au générateur shearographique du front d'onde (13), ledit générateur shearographique du front d'onde (13) incluant un prisme d'inversion du cisaillement (24) entre le séparateur du faisceau de polarisation (20) et le modificateur de l'angle d'ouverture du faisceau (21) afin d'inverser le cisaillement de l'un des deux faisceaux partagés.

7. Autocorrélateur d'impulsions optiques selon la revendication 6, **caractérisé en ce qu'**il est ultérieurement équipé d'un bloc de compensation du temps de propagation (25) entre le séparateur du faisceau de polarisation (20) et le modificateur de l'angle d'ouverture du faisceau (21) pour décaler en temps le second des deux faisceaux partagés.
